# EUROPÄISCHE PATENTANMELDUNG

(11) **EP 3 236 203 A1**
(43) Veröffentlichungstag der Anmeldung: **25.10.2017**
(21) Anmeldenummer: 16166450.3
(22) Anmeldetag: 21.04.2016
(51) Int. Cl.: G01C 15/00, G05D 1/02, E01C 19/00

(54) **VERFAHREN UND TOTALSTATION ZUR STEUERUNG EINER BAUMASCHINE**

(71) Anmelder: MOBA Mobile Automation AG, 65555 Limburg (DE)
(72) Erfinder: Bühlmann, Andreas, 9443 Widnau (CH); Knecht, Pedro, 9443 Widnau (CH)
(74) Vertreter: Zimmermann, Tankred Klaus

(57) **Zusammenfassung**

Ein Verfahren (100) zur Steuerung einer Baumaschine (12) unter Zuhilfenahme einer extern zu der Baumaschine angeordnete Totalstation umfasst die Schritte: optisches Anpeilen (110) der Baumaschine mittels der Totalstation zur Ermittlung eines Ist-Positions-Verlaufs, Ermitteln (120) eines Soll-Positions-Verlaufs (10s1,10s2) und Errechnen (130) von Steuersignalen ausgehend von dem Ist- (10i) und dem Soll-Positions-Verlauf. In einem letzten Schritt werden die Steuersignale mittels einer Drahtlos-Schnittstelle an die Baumaschine gesendet, um diese und/oder das Werkzeug der Baumaschine zu steuern. Darüber hinaus gibt es ein Computerprogramm, eine Totalstation (14) zur Steuerung einer Baumaschine und eine Steuereinheit (12a) einer Baumaschine.

## Beschreibung

Ausführungsbeispiele der vorliegenden Erfindung beziehen sich auf ein Verfahren zur Steuerung einer Baumaschine, insbesondere einer Straßenbaumaschine, sowie auf eine Totalstation zur Steuerung der Baumaschine. Weitere Ausführungsbeispiele beziehen sich auf eine entsprechende Software zur Steuerung sowie auf eine Schnittstelle der Baumaschine, über welche dieselbe gesteuert werden kann.

Im Straßenbau werden beispielsweise durch ein Planungsbüro Plandaten ermittelt, die im Wesentlichen eine Vielzahl an Soll-Positionen darstellen, auf welche das Ist-Planum durch bspw. Auf- oder Abtragen von Erde, Schotter oder Asphalt gebracht werden soll. Des Weiteren können diese Plandaten typischerweise auch noch eine Angabe bezüglich der Stärke des auf- oder abzutragenden Planums (bspw. ein Straßenbelag) sowie eine zugehörige Neigung oder auch andere relevante Informationen bzgl. eines auf- oder abzutragenden Planums (bspw. ein Straßenbelag) umfassen. Ausgehend von dieser Vielzahl von Soll-Positionen für den Straßenbelag wird dann ein Soll-Positions-Verlauf ermittelt, den eine Baumaschine, wie bspw. ein Straßenfertiger beim Aufbringen eines Straßenbelags, abfahren soll, um die Straße entsprechend den Plandaten aufzubringen. Dabei kann es sich aber auch um andere Maschinen und Geräte zum Ausbreiten, Abtragen oder Bewegen von Erde, Schotter, Sand, Beton, Asphalt, Bitumen und anderen Materialien, wie beispielsweise einen Bagger, Bulldozer, Grader oder Fräsmaschine für Straßenbeläge handeln. Von daher sind weitere Beispiele, Erläuterungen und Ausführungen nicht nur auf einen Straßenfertiger und den Einbau von Asphalt limitiert sondern auch auf andere Maschinen und Geräte im Bereich Erdbewegung sowie andere zu verarbeitende Materialien wie oben genannt übertragbar bzw. anwendbar.

Im laufenden Betrieb wird der Straßenbaufertigungsvorgang überwacht, um hier entsprechende Korrekturen vornehmen zu können. Beispielsweise wird bei einem Straßen- bzw. Asphaltfertiger die Asphaltdicke entweder absolut oder über einen Höhenpunkt der Straßendecke beziehungsweise eine Höhe des Straßenbaufertigers (die sich mit einem Offset zu der Höhe des Straßenbelags verhält) ermittelt. Diese Höhe wird im Regelfall in Bezug auf einen Fixpunkt bestimmt. Selbstverständlich werden anstatt oder zusätzlich zur Bestimmung der Höhe auch die Positionspunkte der aufgebrachten Straße kontrolliert. Bei all diesen Überwachungsaufgaben kommt eine sogenannte "Totalstation" zum Einsatz. Ein Beispiel für eine derartige Totalstation ist die Viva TS16 von der Leica Geosystems AG.

Diese Totalstationen haben im Regelfall eine Optik sowie eine entsprechende Bildverarbeitung (Hard- und Software), mittels welcher ein Prisma, welches an der zu messenden Ist-Position (auf dem Ist-Positions-Verlauf), z.B. dem Straßenbaufertiger, Bulldozer oder Grader angeordnet ist, angepeilt wird. Ferner umfasst die Totalstation eine Neigeeinrichtung, mittels welcher die Horizontierung gewährleistet bzw. überwacht wird. Durch die erhaltenen Neigungswinkel kann die Totalstation Abweichungen der Horizontierung kompensieren, während über die Optik und Bildverarbeitung die Position des Prismas berechnet werden kann. Hierdurch ist es möglich, z. B. den Straßenbaufertiger, Bulldozer oder Grader, wenn auf diesem (d. h. am Chassis oder auf dem Dach der Maschine) oder am Werkzeug der Maschine das Prisma angebracht ist, in seinem Ist-Positions-Verlauf zu beobachten.

Ausgehend von dem so beobachtenden Ist-Positions-Verlauf der Baumaschine kann ein Abgleich zu dem Soll-Positions-Verlauf erfolgen und der Ist-Positions-Verlauf entsprechend korrigiert werden, um eventuelle Abweichungen zwischen Ist und Soll zu kompensieren. Diese Steueraufgabe des beispielweise Straßenbaufertigers kann auch automatisiert beziehungsweise teilautomatisiert durchgeführt werden, wie es beispielsweise in der DE 199 51 296 C2 beschrieben ist.

Die DE 199 51 296 C2 geht davon aus, dass das Prisma beispielsweise auf einer Bohle des Straßenbaufertigers angebracht ist, wobei die Bohle direkt auf dem aufgebrachten Straßenbelag aufliegt, so dass sie direkt dem Ist-Positions-Verlauf folgt beziehungsweise eine Ist-Position des Straßenbelags zu einem Zeitpunkt t darstellt.

Grundsätzlich stellt sich ein solches System, bei dem sowohl der Steuerungsrechner als auch ein Display als Bedieneinheit zur Interaktion mit dem Fahrer auf der Maschine angeordnet ist, wie folgt dar: Der Steuerungsrechner empfängt dabei Ist-Positionsdaten des Prismas von der Totalstation und berechnet die notwendigen Abweichungen bzgl. einer Soll-Position bzw. eines Soll-Straßenverlaufs (sog. Soll-Straßendesign). Diese werden einem Nivellierrechner zugeführt, welcher dann Hydraulikventile zum Verstellen des Werkzeugs der Maschine entsprechend ansteuert. Auf dem Display der Bedieneinheit wird im Wesentlichen das Profil der zu bauenden Straße beziehungsweise des zu bearbeitenden Untergrunds dargestellt. Weiterhin kann mithilfe dieses Displays das 3D-System konfiguriert/kalibriert/eingerichtet werden.

Üblicherweise sendet die Totalstation auf Anfrage des 3D-Steuerungsrechners Positionsdaten an denselben, d. h. an den Rechner. Geht das Prisma verloren (beispielsweise durch einen Gegenstand, der zwischen Totalstation und Prisma steht), so wird nach einigen Sekunden eine Fehlermeldung auf dem Display des 3D-Systems angezeigt. Das 3D-System auf der Maschine hat dabei keinen direkten Zugriff auf die Steuerung (Software) der Totalstation, sondern nur über einen sog. "Remote-Zugriff" (Polling mittels des Remote-Protokolls der Totalstation). Allein durch den Verlust des Prismas ist die Kommunikation mit der Totalstation noch nicht unterbrochen, erst wenn etwas mit der Radio/Funkverbindung nicht stimmt.

Eine Baumaschine mit einem 3D-System auszurüsten ist meist sehr aufwendig, da sowohl die Totalstation als auch das 3D-System auf der Maschine konfiguriert beziehungsweise eingerichtet werden muss. Wird dies nur vom Fahrer der Maschine durchgeführt, so muss dieser mehrmals zwischen der Totalstation und der Maschine hin- und herlaufen, bis das System vollständig konfiguriert ist. Deshalb besteht der Bedarf nach einem verbesserten Ansatzpunkt.

Aufgabe der vorliegenden Erfindung ist es, ein Konzept zu schaffen, das einen besseren Kompromiss aus Bedienbarkeit, Zuverlässigkeit und Systemkomplexität hat.

Die Aufgabe wird durch die unabhängigen Patentansprüche gelöst.

Ausführungsbeispiele der vorliegenden Erfindung schaffen ein Verfahren zur Steuerung einer Baumaschine, z.B. eines Straßenbaufertigers, unter Zuhilfenahme einer extern zu der Baumaschine angeordneten Totalstation. Das Verfahren umfasst vier Basisschritte, nämlich das optische Anpeilen und automatische Verfolgen der Baumaschine mittels der Totalstation, um einen Ist-Positions-Verlauf der Baumaschine zu erhalten und das Ermitteln eines Soll-Positions-Verlaufs der Baumaschine anhand von (z. B. über einen USB-Port oder mittels einer Drahtlos-Schnittstelle eingelesenen) Plandaten. Ausgehend von dem Ist-Positions-Verlauf und dem Soll-Positions-Verlauf werden Steuersignale zur Steuerung der Baumaschine ermittelt. Diese Steuersignale werden nun unter Zuhilfenahme einer Drahtlos-Schnittstelle an die Baumaschine gesendet, um diese zu steuern und dabei Abweichungen zwischen dem Ist-Positions-Verlauf und dem Soll-Positions-Verlauf zu kompensieren.

Weitere Ausführungsbeispiele beziehen sich auf eine Totalstation zur Steuerung der Baumaschine. Die Totalstation umfasst hierzu einen Positionsverlaufsbestimmer, der einen Schritt des Anpeilens und das automatische Verfolgen des Prismas durchführt, einen Speicher und eine Speicherschnittstelle, über welche die Plandaten ausgelesen werden, eine Steuerung zur Ermittlung der Steuersignale sowie die Drahtlos-Schnittstelle zur Ermittlung der Steuersignale an die Baumaschine.

Zusätzliche Ausführungsbeispiele beziehen sich auf eine Steuereinheit der Baumaschine, über welche dieselbe "fernbedient" wird. Die Steuereinheit umfasst ebenfalls eine Drahtlos-Schnittstelle, über welche die extern generierten Steuersignale empfangen werden, einen Signalumsetzer, der ausgebildet ist, ausgehend von den extern generierten Steuersignalen Maschinensignale zu generieren und eine Maschinenschnittstelle, über welche die Maschinensignale an die Aktorik der Baumaschine ausgegeben werden.

Ausführungsbeispielen der vorliegenden Erfindung liegt die Erkenntnis zugrunde, dass es die bevorzugte Variante ist, die Steuerung einer (Straßen-) Baumaschine nach extern, nämlich zu der Position der Totalstation beziehungsweise sogar in die Totalstation selbst zu verlagern, mit welcher die Ist-Position der (Straßen-) Baumaschine "getrackt" wird. Infolge der Verlagerung werden die Steuerbefehle in / an der Totalstation ausgehend von dem Soll-Zustand der gebauten Straße im Vergleich zu dem Ist-Zustand der gerade zu bauenden Straße bzw. dem auf- oder abzutragenden Planum bestimmt. Dieser Ansatz hat zahlreiche Vorteile: Für den Maschinenfahrer entfällt dadurch das oben beschriebene ständige Hin- und Herlaufen des Maschinenfahrers zwischen der (Straßen-) Baumaschine und der Totalstation, da die Bedienung des 3D-Systems an den Ort der Totalstation verlagert wird und die Aufgabe des Einrichtens und kontinuierlichen Betreuens ein fachkundiger Vermesser oder Bediener oder Betreuer der Totalstation bzw. der Baustelle übernimmt. Der Maschinenfahrer hat dann an sich mit dem 3D-System nicht mehr viel zu tun und kann sich nunmehr auf das Fahren bzw. Steuern der Maschine konzentrieren. Da die Ist-Abweichungen der Maschine bzw. des Werkzeugs von der Totalstation zur Maschine gesendet werden, verhält sich das System demnach so, als wäre ein wie bisher bekannter CAN-Sensor an der Maschine angeschlossen. Zur Unterstützung kann dem Fahrer zusätzlich über eine in der Fahrerkabine angeordnete Anzeigeeinheit eine entsprechende Visualisierung des Systems (gleich oder ähnlich der Darstellungen auf dem Display der Totalstation) angezeigt werden. Dabei ist es auch denkbar, dass diese Visualisierung auf einem Tablet-PC, Smartphone oder dergleichen dem Fahrer oder weiteren auf der Baustelle vorhandenen Personen angezeigt wird.

Die vorliegende Erfindung ist in vorteilhafter Weise besonders gut für sogenannte Mietsysteme geeignet, da der oder die Maschinenfahrer eines ausführenden Bauunternehmens sich nicht mehr das "Know-How" des 3D-Systems aneignen müssen, sondern dieses einfach mietet. Zusätzliches Know-How (beispielsweise Straßendesign-Handling, Stationierung der Totalstation usw.) ist für den oder die Fahrer nicht mehr notwendig. Denn das wird durch den vorhanden Bediener der Totalstation durchgeführt bzw. überwacht. Dabei ist es auch denkbar, dass ein entsprechend ausgebildeter Maschinenfahrer diese Aufgaben auch übernehmen kann.

Weitere Vorteile ergeben sich durch die vorliegende Erfindung dadurch, dass eine auf der Totalstation installierte Steuerungssoftware wesentlich schneller auf Probleme reagieren kann, z. B. wenn das Prisma "verlorengeht", d. h. also nicht mehr angepeilt werden kann oder wenn die Totalstation aufgrund von Kippen oder Einsacken ihre Ausrichtung ändert. Dadurch, dass das 3D-System nun einen direkten Zugriff auf die Steuerung (Software) der Totalstation hat, entfällt in vorteilhafter Weise der eingangs beschriebene "Remote-Zugriff" (Polling mittels des Remote-Protokolls der Totalstation). Dadurch wird die Zugriffszeit auf Informationen bzw. auftretende Probleme etc. wesentlich verkürzt und demnach eine Reaktionszeit des Systems signifikant erhöht. Auf all diese Vorteile wird nachfolgend noch weiter eingegangen werden.

Entsprechend weiteren Ausführungsbeispielen umfasst der Ist-Positions-Verlauf eine Vielzahl an Positionen mit entsprechenden Koordinaten (meist polar oder kartesisch), wobei unter Koordinaten im Regelfall Relativkoordinaten in Bezug auf den Standort der Totalstation zu verstehen sind. Hier dienen dann die Steuersignale dazu, das Lenken der Baumaschine zu koordinieren. Insofern umfassen die Steuersignale einen Signalteil zur Ansteuerung der Lenkung. Denkbar ist es auch, dass eine Längsbewegung der Maschine reguliert werden kann und die Steuersignale einen Signalteil zur Regulierung der Längsbewegung (Gasbremse) umfassen. Entsprechend weiteren Ausführungsbeispielen kann der Ist-Positions-Verlauf auch eine Höheninformation umfassen beziehungsweise eine Veränderung derselben. Dann umfassen die Steuersignale ein Signalanteil zur Steuerung der Materialdicke (bspw. Asphaltschichtdicke) und/oder der Planumsneigung (bspw. Straßenneigung). Entsprechend weiteren Ausführungsbeispielen kann der Ist-Positions-Verlauf auch unter Zuhilfenahme externer Sensordaten, z. B. von Sensordaten der Baumaschine bestimmt werden. Ein Beispiel derartiger Sensordaten ist die Straßenneigung. Hier werden dann die Steuersignale zur Steuerung der Straßenneigung genutzt. In all diesen Ausführungsbeispielen können die Plandaten dreidimensionale Daten umfassen, die das auf- oder abzutragende Material (bspw. einen Straßenbelag) und/oder das Auf- oder Abtragen des Materials (bspw. eine Straßenbelagsaufbringung) in ihrer Längs- und Breitenrichtung und/oder in ihrer Neigung und/oder in ihrer Dicke beschreiben.

Ein weiteres Ausführungsbeispiel bezieht sich auf ein Computerprogramm zur Durchführung des oben beschriebenen Verfahrens. Hierbei ist es vorteilhaft, dass dieses Computerprogramm beispielsweise auf die Totalstation installiert werden kann, so dass dieses die auf der Totalstation implementierte Intelligenz und Sensorik direkt nutzen kann. Hierbei kann auf alles, was die Sensorik und Rechenkapazität der Totalstation bietet, wie z. B. die Kamera oder die Bildverarbeitung, zugegriffen werden. Ein direkter Zugriff auf das Design der Straße (Oberflächenbeschaffenheit) ist ebenso möglich sowie auf eine durchgeführte Volumenberechnung bezüglich des Straßenbelags (Benutzung der Ausgaben der Totalstation bzw. deren Software).

Bezug nehmend auf das Ausführungsbeispiel hinsichtlich der Steuereinheit der Baumaschine sei angemerkt, dass entsprechend weiteren Ausführungsbeispielen die Maschinenschnittstelle dazu ausgebildet sein kann, den Lenkwinkel und/oder Längsbeschleunigungsbeeinflusser (Gas und Bremse) anzusteuern. Additiv oder alternativ hierzu wäre es auch möglich, dass eine Schnittstelle zu dem Nivellierungsrechner oder direkt zu dem Hydraulikventil gegeben ist, so dass die Werkzeughöhe, die Werkzeugneigung, die Werkzeugposition, der Werkzeugdrehwinkel und/oder die Materialmenge (bspw. eine Straßenbelagsausbringungsmenge) regulierbar sind.

Entsprechend zusätzlichen Ausführungsbeispielen kann die Steuerschnittstelle eine Schnittstelle zur Anbindung eines Nutzerinterfaces, d. h. also für die graphische Darstellung im Maschinenhaus (Fahrerkabine), vorgesehen sein.

Ein weiteres Ausführungsbeispiel bezieht sich auf ein System umfassend die Totalstation und die entsprechende Steuereinheit für den Straßenbaufertiger.

Weiterbildungen sind in den Unteransprüchen definiert. Ausführungsbeispiele werden nachfolgend anhand der beiliegenden Zeichnungen erläutert. Es zeigen:
- Fig. 1a: eine schematische Darstellung eines Straßenbaufertigers in Kombination mit einer separiert angeordneten Totalstation zur Illustration des erfindungsgemäßen Konzepts;
- Fig. 1b: ein schematisches Flussdiagramm zur Illustration des erfindungsgemäßen Verfahrens.
- Fig. 2: ein schematisches Blockdiagramm des erfindungsgemäßen Konzepts entsprechend den weiteren Ausführungsbeispielen;
- Fig. 3: ein schematisches Blockdiagramm einer Steuereinheit für einen Straßenbaufertiger;
- Fig. 4a: eine Abbildung einer Totalstation mit implementierter Steuerfunktionalität; und
- Fig. 4b-j: Screenshots der Implementierung der Steuerung auf einer Totalstation,

Bevor nachfolgend Ausführungsbeispiele der vorliegenden Erfindung anhand der Figuren im Detail erläutert werden, sei darauf hingewiesen, dass gleichwirkende Elemente und Strukturen mit gleichen Bezugszeichen versehen sind, so dass die Beschreibung derer aufeinander anwendbar beziehungsweise austauschbar ist.

Wie eingangs bereits beschrieben kann es sich bei der vorliegenden Erfindung um verschiedenartige Maschinen (Baumaschinen) und Geräte zum Ausbreiten, Abtragen oder Bewegen von Erde, Schotter, Sand, Beton, Asphalt, Bitumen und anderen Materialien, wie beispielsweise einen Bagger, Bulldozer, Grader oder Fräsmaschine für Straßenbeläge handeln. Von daher sind weitere Beispiele, Erläuterungen und Ausführungen nicht nur auf einen Straßenfertiger und dessen Steuerung bzw. auf die Steuerung dessen Werkzeugs (Bohle) limitiert sondern auch auf andere Maschinen und Geräte im Bereich Erdbewegung (Auf- oder Abtragen eines Planums) sowie andere zu verarbeitende Materialien übertragbar bzw. anwendbar.

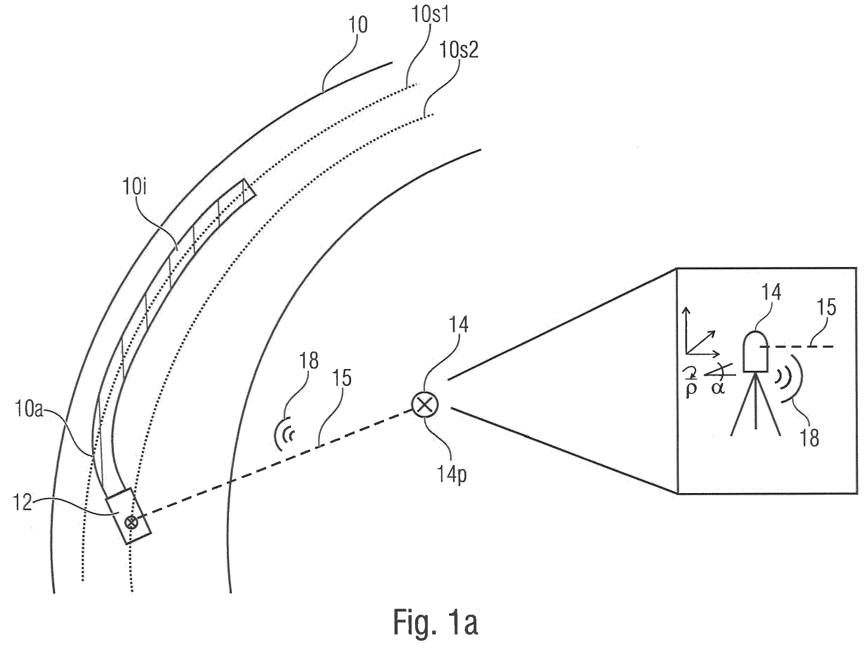

Fig. 1a zeigt eine zu fertigende Straße 10 mit hier zwei exemplarisch illustrierten Soll-Bewegungsbahnen 10s1 und 10s2. Die Baumaschine bzw. der Straßenbaufertiger 12 erledigt gerade das Aufbringen des Straßenbelags entlang der Ist-Bewegungsbahn 10i, die größtenteils der gestrichelt illustrierten Soll-Bewegungsbahn 10s1 folgt. Die Soll-Bewegungsbahnen 10s1 und 10s2 (Soll-Zustand der Straße) stellen tatsächlich die Position bezüglich geeigneter Koordinatensysteme sowie ggf. die Dicke/Höhe des Straßenbelags dar. Die Ist-Bewegungsbahn 10i (aktueller Ist-Zustand / Fortschritt des Asphaltiervorgangs) wird dadurch ermittelt, dass, wie im Stand der Technik auch bereits schon erfolgt, die Position des Straßenbaufertigers in Bezug auf Länge, Breite und Höhe oder, um genau zu sein, die Position eines Werkzeugs, wie einer Bohle, die dem Straßenverlauf der aufgebrachten Asphaltschicht folgt, in Bezug auf Länge, Breite und Höhe bestimmt wird. An dem Punkt 10a weicht der Straßenfertiger 12 von der Soll-Bewegungsbahn 10s1 ab.

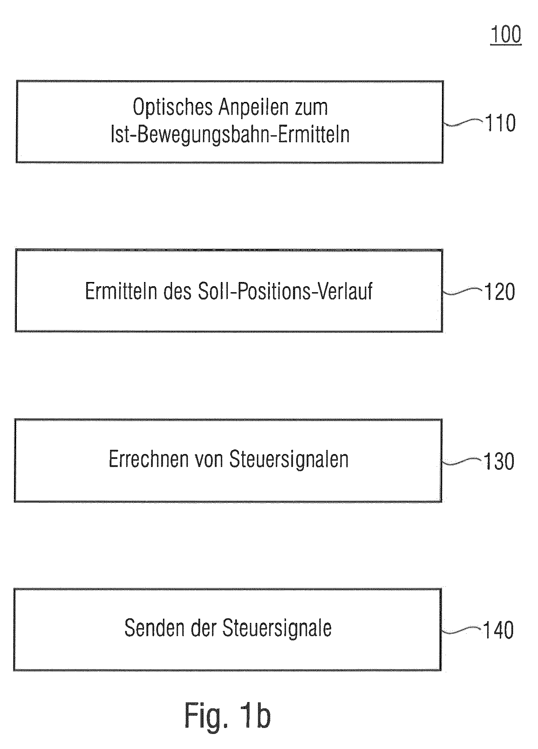

Um diese Abweichung zu verhindern beziehungsweise zu kompensieren, kann nachfolgend erläuterte Steuerprozedur durchgeführt werden: Dieses Verfahren zur Steuerung 100 wird Bezug nehmend auf Fig. 1b erläutert. Um zuerst die Abweichung zu ermitteln, wird die Soll-Bewegungsbahn 10s1 mit der Ist-Bewegungsbahn 10i abgeglichen. Hierzu wird zuerst die Ist-Bewegungsbahn 10i unter Zuhilfenahme der Totalstation 14, welche in Fig. 1 vergrößert dargestellt ist, bestimmt. Dieser Schritt 110 (vgl. Fig. 1 b) verläuft wie folgt.

Die Totalstation 14 ist an einem bekannten Fixpunkt 14p, bevorzugt außerhalb des Bereichs der zu fertigenden Straße 10 aufgestellt. Hierbei sind sowohl die Koordinaten des Punkts 14p als auch die relative Höhe desselben zu dem Untergrund des Straßenbelags beziehungsweise zu der finalen Oberdecke des Straßenbelags bekannt. Mittels der Totalstation 14 wird (zur Positionsverlaufsbestimmung des Straßenfertigers) unter Zuhilfenahme von optischen und bildverarbeitenden Mitteln die Position beziehungsweise die Vielzahl der Positionen des Straßenfertigers 12 entlang der Bewegungsbahn 10i angepeilt, was durch die gestrichelte Linie "Peilung" mit dem Bezugszeichen 15 deutlich gemacht ist. Bei diesem Anpeilvorgang kann beispielsweise ein Laserstrahl einer Totalstation 14 zu einem Prisma, welches auf dem Straßenbaufertiger 12 montiert ist, emittiert werden, der dann nach Reflexion an dem Prisma hinsichtlich Laufzeit ausgewertet werden kann. Aus dieser Laufzeitinformation ist der Abstand zwischen dem Straßenfertiger 12 und der Totalstation 14 berechenbar. Des Weiteren wird nur ein reflektierter Lichtstrahl 15r erhalten, wenn die Totalstation 14 (direkt) auf das Prisma des Straßenfertigers 12 ausgerichtet ist.

Die Ausrichtungsparameter (Rotation p sowie Kippwinkel α) stellen die eigentlichen Messwerte dar. Ausgehend von diesen Werten ist unter Kenntnis des Punktes 14p die genaue Position des Straßenfertigers 12 und damit auch die Ist-Bewegungsbahn 10i entlang seiner Bewegung detektierbar.

Durch Einlesen der Plandaten in einem zweiten Schritt 120, z. B. in die Totalstation 14 oder in eine separate neben der Totalstation 14 angeordnete Steuereinheit (umfassend Speicher/Speicherschnittstelle für die Plandaten, Steuerung und Funkschnittstelle), sind dann auch die Soll-Bewegungsdaten 10s1 und 10s2 bekannt. Durch den Vergleich dieser zwei Positionsverläufe 10i zu 10s1 kann dann die Abweichung an den Punkt 10a detektiert werden, um ausgehend von dieser Abweichung Steuersignale zu generieren. Dieser Schritt des Generierens der Steuersignale (vgl. Bezugszeichen 130 in Fig. 1 b) erfolgt auch in der Totalstation beziehungsweise in dem neben der Totalstation angeordneten Computer (Steuereinheit).

Die Steuersignale werden dann unter Zuhilfenahme einer Drahtlos-Schnittstelle (vgl. Funksignale 18) an den Straßenbaufertiger 12 übermittelt. Dieser Schritt ist in dem Flussdiagramm von Fig. 1b mit dem Bezugszeichen 140 gekennzeichnet. Als mögliches Übertragungsmittel sind beispielsweise Bluetooth oder WLAN, aber auch GSM zu nennen. Es ist aber auch jedes andere drahtlose Kommunikationsmedium möglich.

Diese Steuersignale, die per Funk 18 seitens des Straßenbaufertigers 12 empfangen werden, müssen dann im Straßenbaufertiger nur noch an den sogenannten "Nivellierrechner" weitergegeben werden. Das heißt also, dass in dem Straßenfertiger 12 anstelle des Steuerrechners ein Funk-Fahrzeugbus-Umsetzer, wie z. B. ein WLAN/CAN-Gateway, vorgesehen ist, welches die Daten des Steuerrechners (in oder neben der Totalstation 14) weiterleitet. Auf dem Straßenbaufertiger 12 können folglich der Steuerungsrechner und auch das zu diesem gehörenden 3D-Display sowie die zugehörige Verkabelung entfallen. Es sei aber an dieser Stelle auch angemerkt, dass auf der Maschine ein Display zur Darstellung des Profils der zu bauenden Straße nicht unbedingt erforderlich ist. Ausgehend von dem Beispiel, dass der Soll-Positions-Verlauf Az-, V- und SD-Koordinaten in Bezug auf die Position der Totalstation 14 oder X- und Y-Koordinaten in Bezug auf die Erdoberfläche beschreibt, wird mittels den extern generierten Steuersignale, Lenkwinkel und/oder die Vorwärtsbewegung über Gas und Bremse gesteuert werden, was einem Art "Fernbedienen" entspricht.

Entsprechend weiteren Ausführungsbeispielen können auch Höheninformationen dem Steuersignal hinzugefügt werden. Entsprechend diesem Ausführungsbeispiel werden dann auch noch zusätzlich Informationen, wie Dicke des aufzubringenden Straßenbelags beziehungsweise die gewünschte Höhe der Straßenoberfläche und/oder eine Neigung des Straßenbelags beschrieben. Ausgehend von diesen Steuersignalen würde da die Materialaufbringungsmenge und damit die Asphaltdicke beeinflusst oder auch über eine Hydraulik die entsprechenden Werkzeuge verkippt, so dass die Straßenneigung angepasst werden kann.

Bezüglich des Schrittes 110 der Ermittlung der Ist-Positionen 10i sei angemerkt, dass es vorteilhaft ist, wenn der Steuerrechner direkt mit der Totalstation verbunden ist beziehungsweise die Steuersoftware direkt auf der Totalstation integriert ist, da beispielsweise im Falle, dass das Prisma "verlorengeht", d. h. also nicht mehr angepeilt werden kann, ein zeitnahes Suchen desselben durch die Totalstation ausgelöst werden kann (sog. eventgetriggert, nicht wie bisher durch aufwendiges Pollen über das Remote-Kommunikationsprotokoll). Übliche Vorgehensweise ist: Vermesser nimmt Geländedaten auf (Ist-Zustand), welche anschließend in einem Konstruktionsbüro mit den Daten der zu bauenden Straße (Soll-Zustand) "in Einklang" gebracht werden. Diese Daten werden dann per USB-Stick auf den Steuerungsrechner der Maschine transportiert. Mit der Integration der Steuerungsrechnerfunktionalität auf die Totalstation muss lediglich der Soll-Zustand der Totalstation zugeführt werden. Der benötigte Ist-Zustand wird mit der Totalstation direkt aufgenommen und Abweichungen zwischen Soll- und Ist-Zustand werden in der Totalstation berechnet.

An dieser Stelle sein angemerkt, dass sowohl der Ist-Positionsverlauf als auch der Soll-Positionsverlauf häufig durch eine Vielzahl von Einzelpositionen bestimmt werden. Diese Einzelpositionen beschreiben im Regelfall eine relative Position in Bezug auf die fix positionierte Totalstation. Diese Positionen sind auch leicht durch die Totalstation 14 zu ermitteln, da die Totalstation, wie gerade angemerkt, ihre Ausrichtungsparameter, Rotation p und Kippwinkel α nachstellt und über die Laufzeit auch einen Abstand bestimmt, so dass die zu bestimmenden Positionen direkt im Polarkoordinatensystem mit Nullpunkt an der Position der Totalstation oder im kartesischen Koordinatensystem vorliegen. Hintergrund hierzu ist, dass die Totalstation 14 die Position gegenüber der Erdoberfläche im polaren oder kartesischen Koordinatensystem misst. Hier werden also direkt die Polarkoordinaten (Az, V, SD) oder kartesischen Koordinaten (X, Y, Z / E, N, H) erhalten, wobei Az der Azimutwinkel, V der Vertikalwinkel, SD die Slope Distance (Werkzeugabstand), E = Easting (Ostausrichtung), N = Northing (Nordausrichtung), H = Height (Höhe) ist.

Bezüglich dieser Betrachtungsweise sei angemerkt, das was soeben als "Ist-Zustand" bezeichnet wurde, den Zustand des Geländes vor Einbau der Straße repräsentiert, während der Soll-Zustand sich auf den Zustand nach Einbau der Straße, also auf Plandaten beziehungsweise einen Planzustand bezieht.

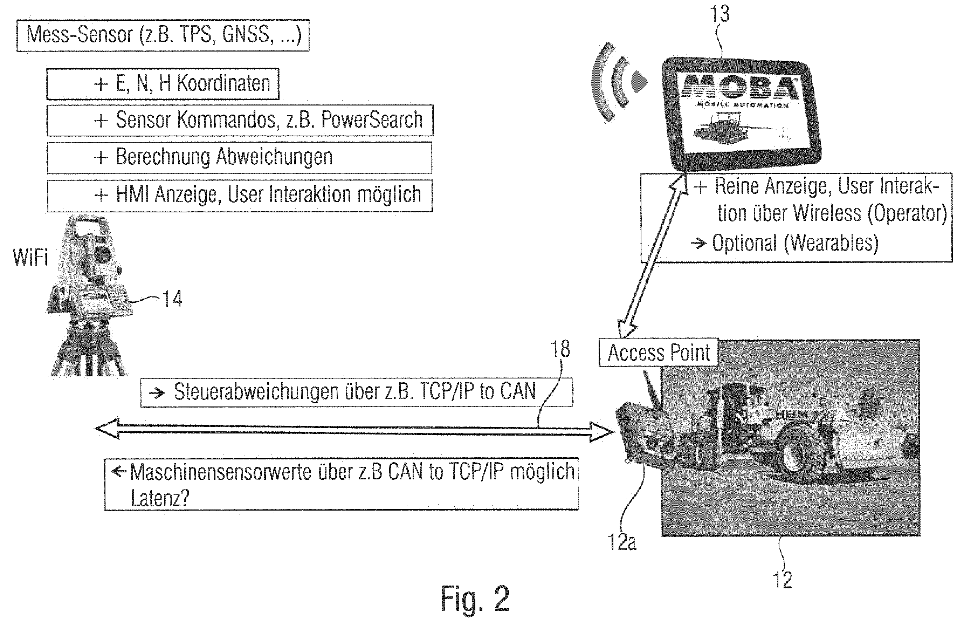

Bezug nehmend auf Fig. 2 wird ein weiteres Ausführungsbeispiel erläutert. Fig. 2 zeigt die Totalstation 14, in welche die Steuerfunktionalität der Software integriert ist. Diese Totalstation 14 kommuniziert über Netzwerk (z. B. TCP/IP) mit dem Access Point 12a des Straßenfertigers 12.

Bei der Totalstation 14 handelt es sich beispielsweise um eine Leica Viva TS16 auf WindowsCE-Basis. Dies umfasst neben den regulären Elementen zur Realisierung der Standard-Totalstationsumfänge auch noch eine Anzeige an einer Kontrolleinheit, über welche die Benutzerschnittstelle zur Steuerung des Straßenbaufertigers realisiert sein kann. Die Integration der Steuerungsfunktionalität in die Totalstation 14 ermöglicht, dass die Software auf weitere Messsensorik, wie z. B. TPS oder GNSS (bspw. mit der Leica Viva SmartStation) zugreifen kann und so automatisch ohne großartiges Einlesen aller Koordinaten (x, y, z) ermitteln kann. Initial wird typischerweise ein sogenannter "Power Search" durchgeführt, mittels welchem das Prisma auf der Straßenfertigungsmaschine 12 gesucht wird. Sollte die Anpeilung des Prismas im laufenden Betrieb nicht möglich sein, kann ein Kommando zu einer erneuten Power Search durch die Steuerungssoftware initiiert werden.

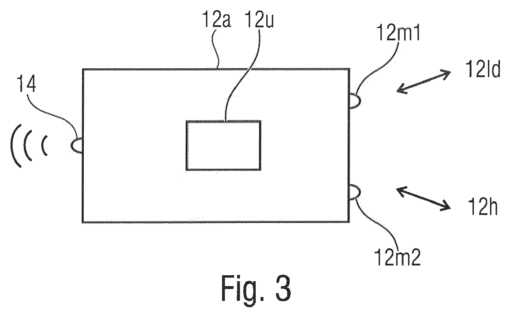

Der Access Point 12a stellt die obige Steuereinheit der Straßenfertigungsmaschine 12 dar. Dieser Access Point ist mit den entsprechenden Maschinenschnittstellen der Straßenbaumaschine erläutert. Hinsichtlich Details wird auf das Ausführungsbeispiel aus Fig. 3 verwiesen.

Entsprechend zusätzlichen Ausführungsbeispielen kann der Access Point 12a auch noch zusätzliche Daten von der Straßenbaumaschine über die LAN-Verbindung der Totalstation beziehungsweise der Steuerungssoftware auf der Totalstation zur Verfügung stellen. Beispiele hierfür sind Daten bezüglich Neigung, Geschwindigkeit oder Lenkwinkel.

Des Weiteren ist es möglich, dass der Access Point 12a noch eine zusätzliche Schnittstelle, wie z. B. eine Funkschnittstelle aufweist, über welche ein zu Darstellungszwecken vorgesehenes Bedienpanel 13 angekoppelt werden kann, welches z.B. den Fahrzeugführer über den aktuellen Betriebszustand beziehungsweise die aktuelle Steuerungsmodi informiert. Alternativ zu einem derartigen Bedienpanel 13, was beispielsweise als Tablet ausgeführt werden kann, sogenannte Wearables, wie z. B. SmartWatches oder Projektionsbrillen etc., eingesetzt werden.

Entsprechend Ausführungsbeispielen kann auch eine Volumenberechnung für die Asphaltdecke in die Totalstation integriert sein.

Hierzu wird beispielsweise zweimal der Ist-Zustand (vor und nach der Bearbeitung durch die Baumaschine) "abgescannt" und das abgetragene Volumen der Erde, Schotter etc. berechnet; Bei dem teuren Totalstation-Scanner ist eine direkte Geländeaufnahme möglich. Weitere Vorteile für die Integration der Software in die Totalstation sind:
- Schnellere Reaktion auf Kompensatoränderungen möglich (Totalstation kippt langsam um, Sicherheit). Eine Totalstation verfügt über einen 2-Achsen Neigungssensor, welcher die horizontale Lage der Totalstation misst. Steht die Totalstation beispielsweise auf lockerem Untergrund, dann "droht" diese "einzusacken", d. h. die Totalstation kippt langsam um (die gemessenen Daten werden folglich ungenau). Ebenso ist es (Erfahrung aus der Praxis) möglich, dass die Totalstation auf Asphalt, der durch Sonneneinstrahlung allmählich weich wird, einzusacken droht;
- Ergebnisse/Abweichungen der Totalstation-internen Absteckung könnten zur Regelung verwendet werden;
- Direkter Zugriff auf die Totalstation-interne Kamera (Situationsfoto, Prismenselektion möglich, usw.);
- Direkte Verwendung der Interfaces möglich (Bluetooth, WLAN, GSM => Remote Support).

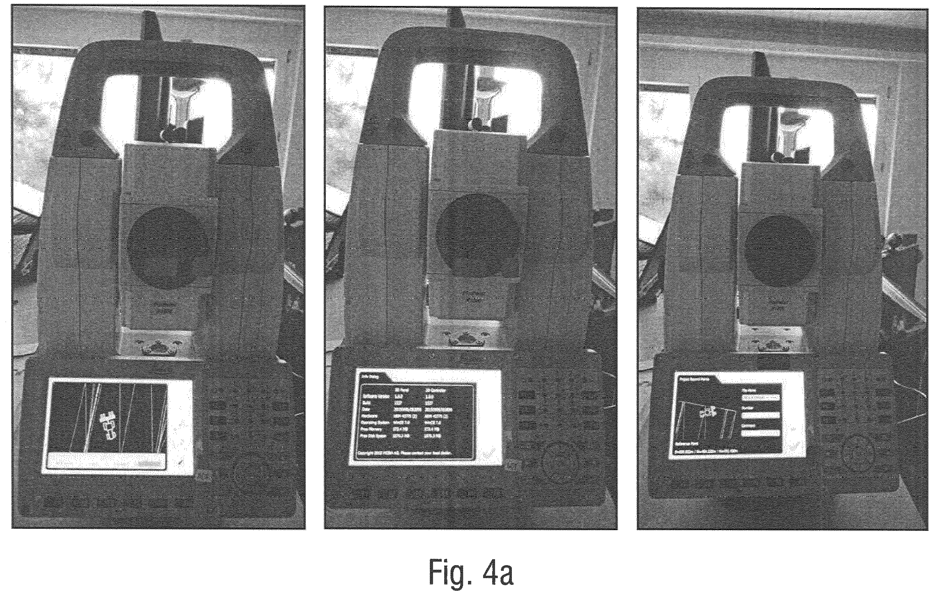

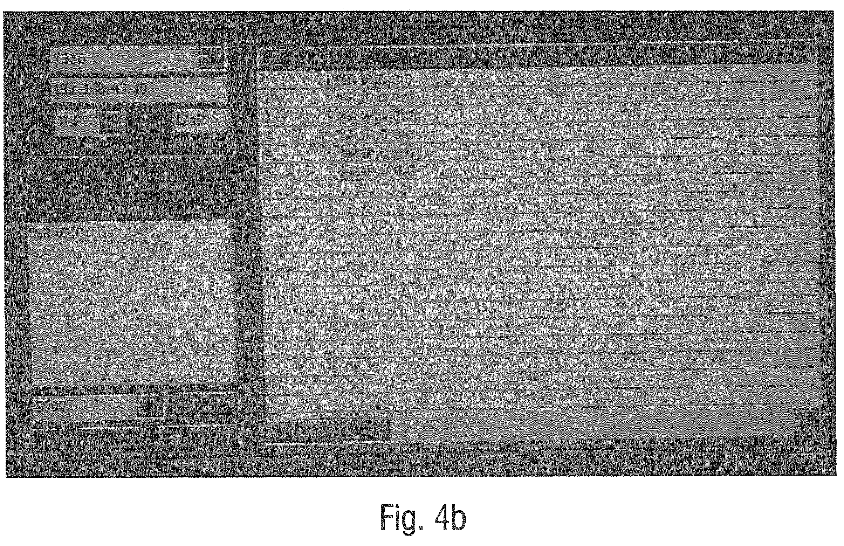

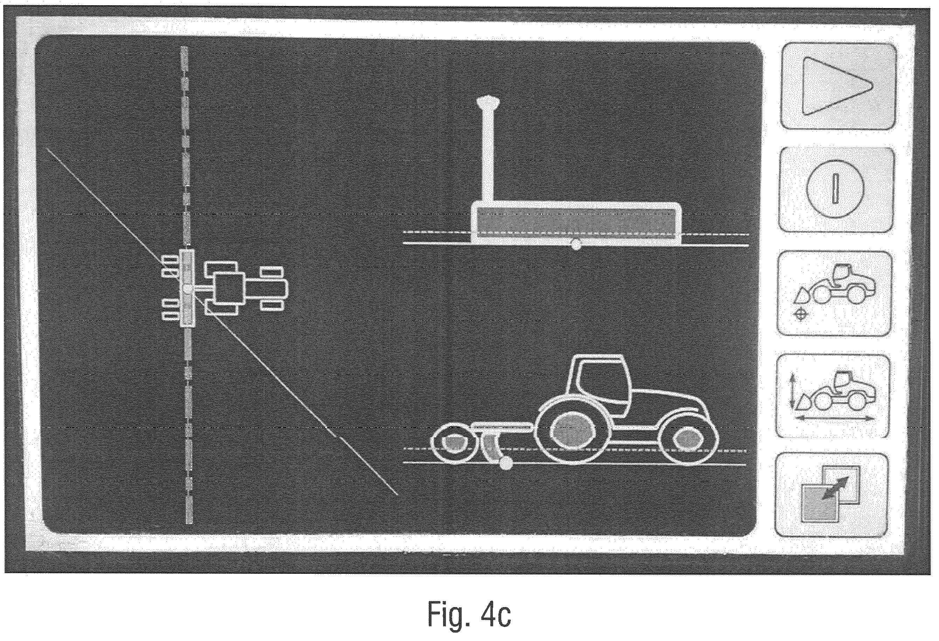

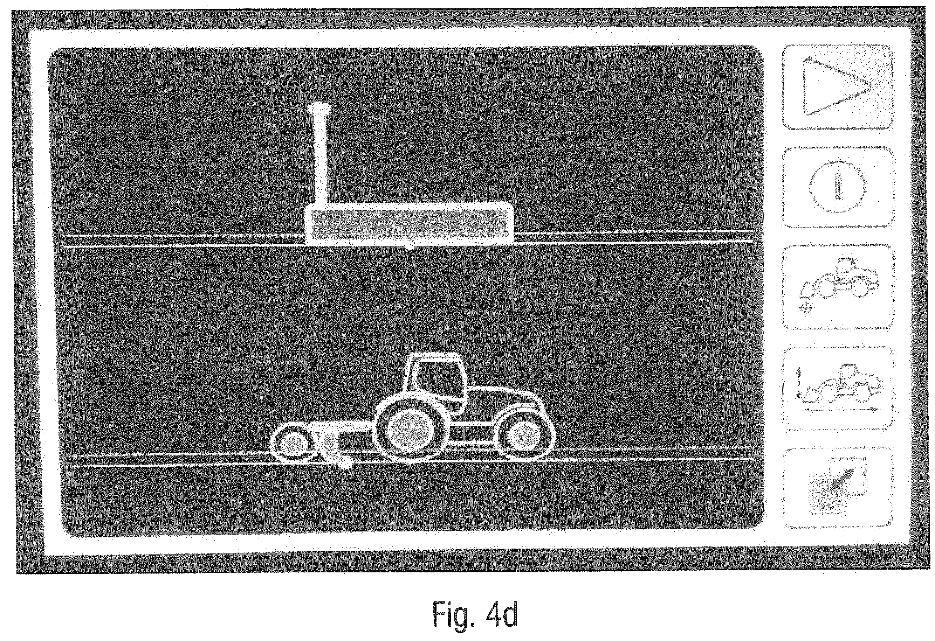

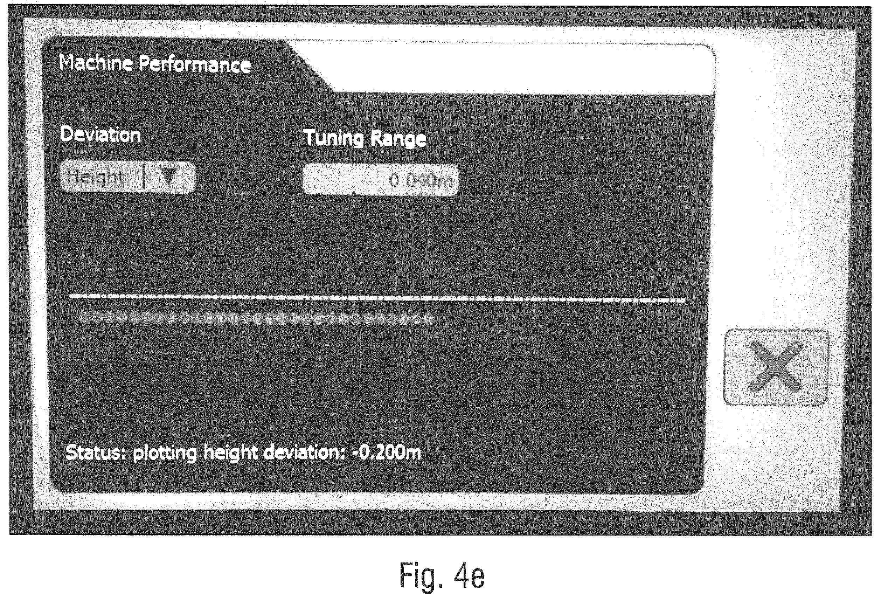

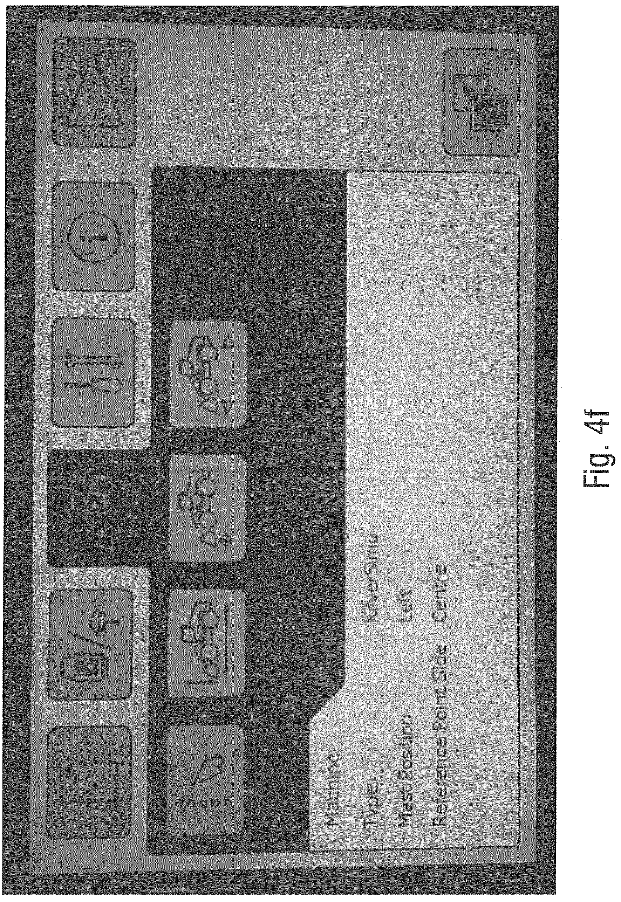

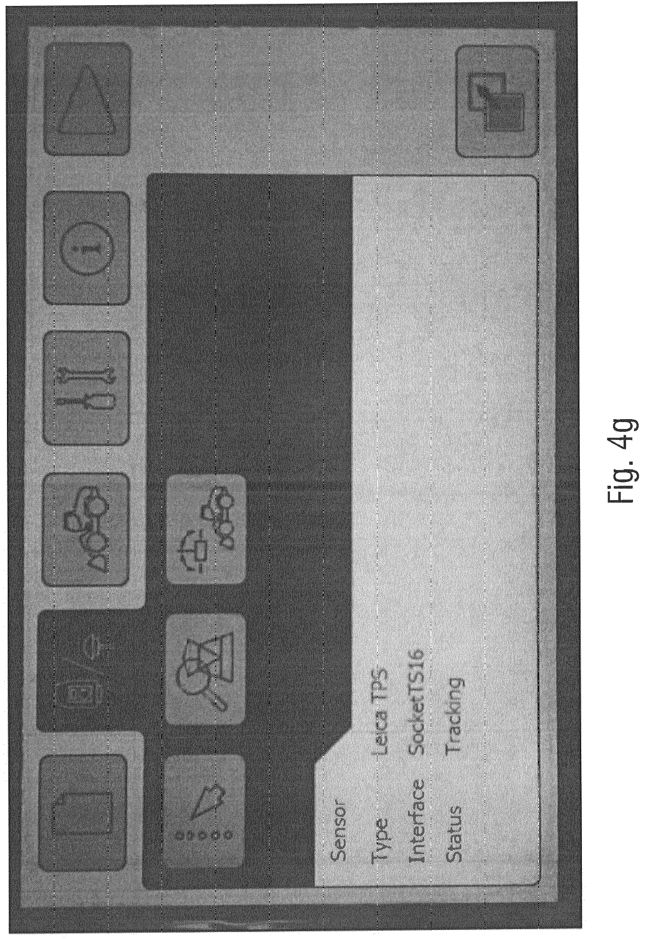

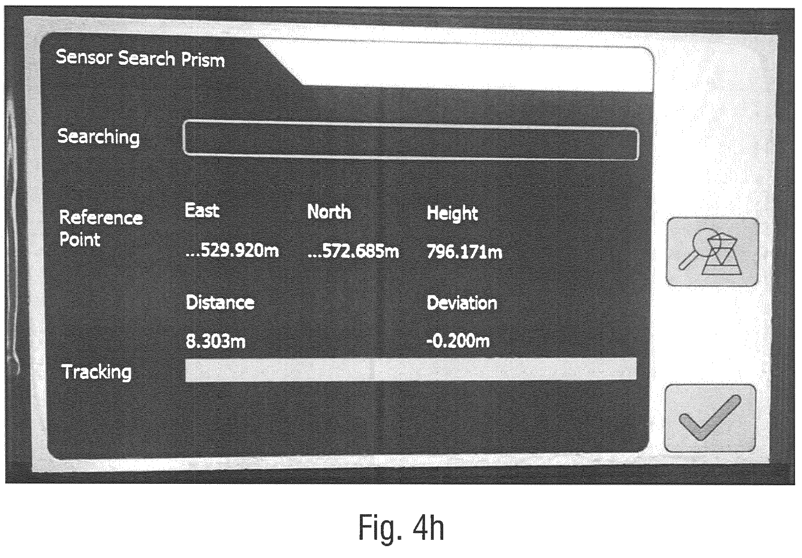

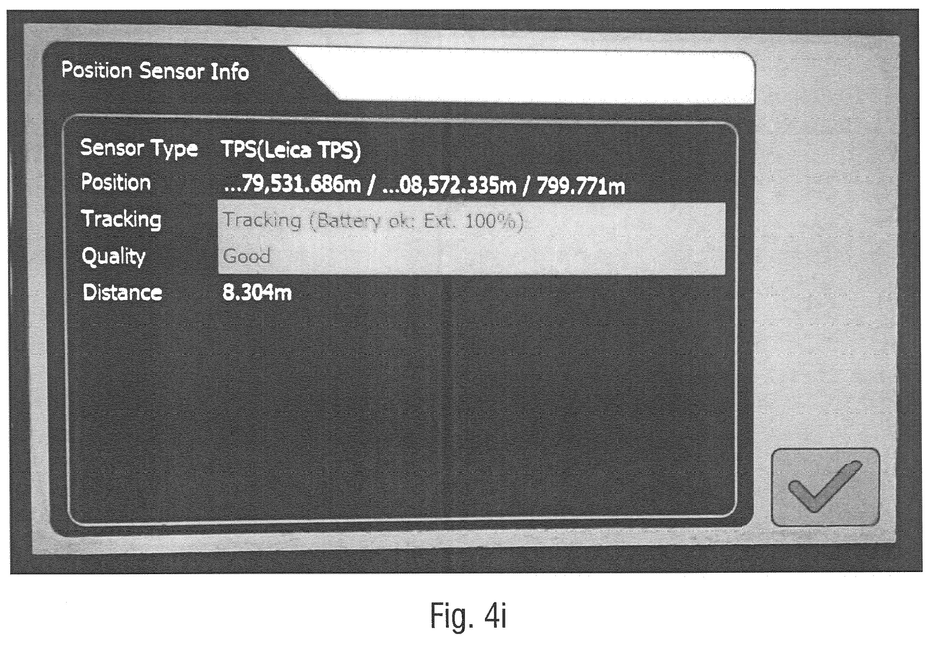

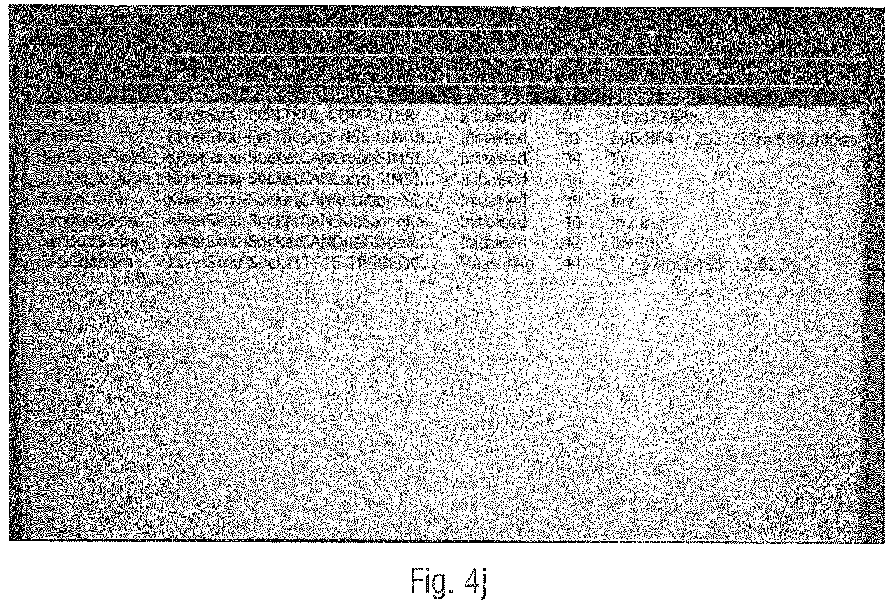

Fig. 4 zeigt die oben als Access Point bezeichnete Steuereinheit 12a für einen Straßenbaufertiger. Diese Steuereinheit umfasst in erster Line eine Hardware-Schnittstelle 14, wie z. B. eine WLAN-Schnittstelle oder eine andere Funkschnittstelle und andererseits bevorzugterweise zwei Maschinenschnittstellen 12m1 und 12m2. Zwischen dieser Funkschnittstelle und den zwei Maschinenschnittstellen 12m1 und 12m2 ist ein Steuersignalumsetzer 12u vorgesehen. Über die Funkschnittstelle 14 werden Steuersignale, z. B. Steuersignale für die Quer- und Längsdynamik des Fahrzeugs empfangen, die dann über die Maschinenschnittstelle 12m1, welche mit der Lenkaktorik und/oder einem Längsdynamikregler verbunden sind. Exemplarisch ist hier der Längsdynamikregler 121d dargestellt. Typischerweise ist diese Schnittstelle 12m1 eine sogenannte CAN-Bus-Schnittstelle, es kann aber auch jedes andere Maschineninterface entsprechend bedient bzw. verwendet werden.

Über die Schnittstelle 12m2 erfolgt die Steuerung der Werkzeuge des Straßenbaufertigers. Hierzu kann beispielsweise eine Hydraulikeinheit 12h an die Schnittstelle 12m2 angekoppelt sein. Der Steuersignalumsetzer 12u empfängt über die Funkschnittstelle Steuersignale zur Regelung der Werkzeuge und leitet diese über die Maschinenschnittstelle 12m2 an die Maschinenhydraulik weiter.

Entsprechend Ausführungsbeispielen kann diese Einheit zusätzlich dazu ausgebildet sein, Daten, z. B. als CAN-Bus (vgl. 12m1) über die Funkschnittstelle 14 an die Totalstation (nicht dargestellt) weiterzuleiten. Entsprechend wiederum weiteren Ausführungsbeispielen kann die Einheit 12a auch noch eine zusätzliche Schnittstelle zur Ankopplung des in Bezug auf Fig. 3 erwähnten Bedienpanels aufweisen.

Bezug nehmend auf Fig. 4a bis 4j wird eine mögliche Implementierung des Verfahrens zur Steuerung des Straßenbaufertigers in eine Totalstation mittels Prinzipsskizzen gezeigt.

Fig. 4a zeigt die Totalstation 14 der Firma Leica (auf welche die Steuerungssoftware implementiert ist). Screenshots der Steuersoftware werden in den Fig. 4b bis 4j dargestellt.

Fig. 4b zeigt die Aktivierung der Netzwerkschnittstelle GeoCom WLAN über die Netzwerkkarte der Totalstation. Fig. 4c zeigt das Menü zur Anpeilung des Straßenbaufertigers, um dessen Ist-Positionen beziehungsweise dessen Ist-Positions-Verlauf zu ermitteln. Fig. 4d stellt den Betrieb während des Steuerns in der Schnittansicht beziehungsweise der Seitenansicht dar. Fig. 4e zeigt das Menü zur Einstellung der Abweichung. Fig. 4f stellt das Maschinenmenü dar. Fig. 4g stellt das Sensormenü dar. Fig. 4h stellt den Modus zum Auffinden des Prismas dar. Fig. 4i stellt ein Info-Display dar, der eine Information bezüglich des Positionssensors wiedergibt. Fig. 4j stellt ein Status-Display für die Kontrolleinheit und die einzelnen Softwaremodule dar.

Wie anhand dieser Screenshots zu erkennen ist, hat der Fahrer mit dem 3D-System nicht mehr viel zu tun. Allgemein bietet die Lösung den Vorteil, dass der Fahrer mit dem 3D-System "nicht mehr viel zu tun hat". Das wäre besonders für Mietsysteme, d. h. eine Baufirma mietet für ein Bauprojekt ein 3D-System, sehr interessant. Alle Vermessungs- und Einrichtarbeiten werden durch einen versierten Fachmann durchgeführt. Auf der Baumaschine ist lediglich ein einfaches Interface (Umsetzer Drahtlos/Maschinenbus), wie bspw. ein WLAN/CAN-Interface, notwendig, welches die Regelabweichungen empfängt und an den Nivellierrechner weitergibt.

Auch wenn obige Ausführungsbeispiele immer im Zusammenhang mit einem Straßenfertiger erläutert wurden, ist die Erfindung nicht auf solche beschränkt, sondern für alle Arten von Baumaschinen anwendbar. Hierbei sind insbesondere Erdbewegungsmaschinen wie Dozer oder Grader zu nennen, bei denen 3D-Systeme gemäß dem Stand der Technik auch schon eingesetzt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zur Steuerung einer Baumaschine (12) unter Zuhilfenahme einer extern zu der Baumaschine (12) angeordneten Totalstation (14), mit folgenden Schritten:
optisches Anpeilen (110) und automatisches Verfolgen der Baumaschine (12) mittels der Totalstation (14), um einen Ist-Positions-Verlauf der Baumaschine (12) zu erhalten;
Ermitteln (120) eines Soll-Positions-Verlauf (10s1, 10s2) der Baumaschine (12) anhand von Plandaten;
Errechnen (130) von Steuersignalen zur Steuerung der Baumaschine (12) ausgehend von dem Ist-Positions-Verlauf (10i) und dem Soll-Positions-Verlauf (10s1, 10s2); und
Senden (140) der Steuersignale, unter Zuhilfenahme einer Drahtlos-Schnittstelle (14), an der Baumaschine (12), um diesen zu steuern und so eine Abweichung zwischen dem Ist-Positions-Verlauf (10i) und dem Soll-Positions-Verlauf (10s1, 10s2) zu kompensieren.

2. Verfahren (100) gemäß Anspruch 1, wobei auf der Baumaschine (12) ein Prisma angeordnet ist und beim optischen Anpeilen sowie automatischen Verfolgen des Prismas der Baumaschine (12) das Prisma mittels eines Lichtstrahls angepeilt wird und ausgehend von der Reflexion des Prismas der Ist-Positions-Verlauf (10i) bestimmt wird.

3. Verfahren (100) gemäß Anspruch 1 oder 2, wobei der Ist-Positions-Verlauf (10i) eine Vielzahl an Positionen in einem polaren oder kartesischen Koordinatensystem umfasst und wobei die Steuersignale Signalteile zur Ansteuerung der Lenkung und/oder Signalteile zur Regulierung der Längsbewegung umfassen.

4. Verfahren (100) gemäß einem der vorherigen Ansprüche, wobei der Ist-Positions-Verlauf (10i) eine Höheninformation umfasst und wobei die Steuersignale Signalteile zur Steuerung der Materialdicke und/oder der Planumsneigung umfassen.

5. Verfahren (100) gemäß einem der vorherigen Ansprüche, wobei das Verfahren (100) den Schritt Empfangen von externen Sensordaten bezüglich der Ist-Neigung umfasst und wobei die Steuersignale Signalteile zur Steuerung der Planumsneigung umfassen.

6. Verfahren (100) gemäß einem der vorherigen Ansprüche, wobei die Plandaten dreidimensionale Daten sind, die das auf- oder abzutragende Material und/oder das Auf- oder Abtragen des Materials in ihrer Längs- und Breitenrichtung und/oder in ihrer Neigung und/oder in ihrer Dicke beschreiben.

7. Verfahren (100) gemäß einem der vorherigen Ansprüche, wobei das Verfahren (100) den Schritt des Ermittelns (120) einer Geländetopografie unter Zuhilfenahme von Bildverarbeitung umfasst; und/oder
wobei das Verfahren (100) den Schritt des Abgleichens der Geländetopografie mit einer geplanten Geländetopografie umfasst.

8. Computerprogramm, umfassend einen Programmcode zur Ausführung eines Verfahrens (100) nach einem der Ansprüche 1 bis 7, wenn dieses auf einem Computer läuft.

9. Totalstation (14) zur Steuerung einer Baumaschine (12), mit folgenden Merkmalen:
einer Positionsverlaufsbestimmung, die ausgebildet ist, die Baumaschine (12) optisch Anpeilen, um einen Ist-Positions-Verlauf (10i) der Baumaschine (12) zu erhalten;
einem Speicher oder einer Speicherschnittstelle, aus welchem Plandaten zur Ermittlung eines Soll-Positions-Verlauf (10s1, 10s2) der Baumaschine (12) auslesbar sind;
einer Steuerung, die ausgebildet ist, Steuersignale ausgehend von dem Ist-Positions-Verlauf (10i) und dem Soll-Positions-Verlauf (10s1, 10s2) zu berechnen;
und
einer Drahtlos-Schnittstelle (14), die ausgebildet ist, die Steuersignale an die Baumaschine (12) zu senden, um diese zu steuern und so eine Abweichung zwischen dem Ist-Positions-Verlauf (10i) und dem Soll-Positions-Verlauf (10s1, 10s2) zu kompensieren.

10. Steuereinheit (12a) einer Baumaschine (12), mit folgenden Merkmalen:
einer Drahtlos-Schnittstelle (14), die ausgebildet ist, extern generierte Steuersignale zu empfangen, wobei die extern generierten Steuersignale generiert sind, um die Baumaschine (12) so zu steuern, dass eine Abweichung zwischen einem Ist-Positions-Verlauf (10i) der Baumaschine (12) und einem Soll-Positions-Verlauf (10s1, 10s2) der Baumaschine (12) kompensiert wird;
einem Signalumsetzer (12u), der ausgebildet ist, ausgehend von den extern generierten Steuersignalen Maschinensignale zu generieren; und
einer Maschinenschnittstelle (12m1, 12m2), über welche die Maschinensignale an die Aktorik der Baumaschine ausgegeben werden.

11. Steuereinheit (12a) gemäß einem der vorherigen Ansprüche, wobei die Aktorik einen Lenkwinkelaktor und/oder einen Längsbeschleunigungsbeeinflusser (121d) umfasst.

12. Steuereinheit (12a) gemäß einem der Ansprüche 10 oder 11, wobei die Aktorik einen Nivellierungsrechner und/oder Hydraulikventile (12h) umfasst, mittels welcher die Werkzeughöhe, Werkzeugneigung, Werkzeugposition, Werkzeugdrehwinkel und/oder Materialmenge regulierbar ist.

13. Steuereinheit (12a) gemäß einem der Ansprüche 10 bis 12, wobei die Steuereinheit (12a) eine Schnittstelle zur Anbindung eines Nutzerinterface (13) für die Baumaschine (12) umfasst, wobei über das Nutzerinterface (13) Informationen bezüglich der Steuerung darstellbar sind.

14. Steuereinheit (12a) gemäß einem der Ansprüche 10 bis 13, wobei die Steuereinheit (12a) eine Sensorschnittstelle umfasst, über welche Sensordaten von der Baumaschine (12) empfangen werden und wobei die Sensordaten über die Drahtlos-Schnittstelle (14) bereitgestellt werden.

15. System umfassend eine Totalstation (14) gemäß Anspruch 9 sowie eine Steuereinheit (12a) gemäß einem der Ansprüche 10 bis 14.
